# EUROPÄISCHE PATENTSCHRIFT

(11) **EP 0 640 567 B1**
(45) Veröffentlichungstag und Bekanntmachung des Hinweises auf die Patenterteilung: **21.03.2001**
(21) Anmeldenummer: 94112034.7
(22) Anmeldetag: 02.08.1994
(51) Int. Cl.: C02F 3/10, B01J 19/30

(54) **Füllmaterial für Tropfkörper zur Behandlung von Fluiden sowie Verfahren zur Herstellung desselben**
Packing for trickling filters for fluid-treatment and process trickling for manufacturing it
Garnissage pour les filtres biologiques pour le traitement de fluides et procédé pour sa fabrication

(30) Priorität: 26.08.1993 DE 4328641
(43) Veröffentlichungstag der Anmeldung: 01.03.1995
(73) Patentinhaber: Norddeutsche Seekabelwerke GmbH, 26954 Nordenham (DE)
(72) Erfinder: Basse, Hartwig, D-26954 Nordenham (DE)
(74) Vertreter: Möller, Friedrich, Dipl.-Ing.

(56) Entgegenhaltungen:
- EP-A- 0 145 853
- DE-A- 3 110 859
- US-A- 4 294 694
- US-A- 4 451 362

## Beschreibung

Die Erfindung betrifft ein Füllmaterial für Tropfkörper zur Behandlung von Fluiden, insbesondere zur biologischen Abwasserreinigung, gemäß dem Oberbegriff des Anspruchs 1 bzw. 6. Weiterhin betrifft die Erfindung ein Verfahren zur Herstellung von zur Behandlung von Fluiden dienendem Füllmaterial gemäß dem Oberbegriff des Anspruchs 7.

Die hier angesprochenen Tropfkörper werden überwiegend in der Abwassertechnik zur biologischen Abwasserbehandlung eingesetzt. Sie können aber auch zur anderweitigen Behandlung von Flüssigkeiten und Gasen, insbesondere Abgasen, eingesetzt werden, wobei auch eine solche Behandlung vorzugsweise biologisch erfolgt. Die Tropfkörper dienen dabei als Träger für die zur biologischen Behandlung erforderlichen Bakterien, nämlich eines sogenannten biologischen Rasens. Die Leistungsfähigkeit einer mit derartigem Füllmaterial bestückten Abwasserreinigungs-Anlage wird von mehreren Faktoren bestimmt. Zum einen soll das Füllmaterial eine möglichst große spezifische Bewuchsfläche bieten, zum anderen soll ein möglichst guter Halt der Bakterien auf dem Füllmaterial gewährleistet sein. Schließlich soll der biologische Rasen auf dem Füllmaterial ungehindert von dem zu behandelnden Fluid, einer Flüssigkeit oder einem Gas, umströmt bzw. benetzt werden können.

Aus der EP-B 0 274 633 geht ein gattungsgemäßes Füllmaterial hervor, dessen Streifen durch eine quer zur Längsrichtung derselben gerichtete Haltebahn miteinander verbunden sind. Die Streifen weisen über ihre Länge gleiche Querschnitte auf. An gegenüberliegenden Randbereichen sind sie mit Aufwölbungen versehen. In der Mitte verfügen die Streifen über einen glatten Verlauf. Es hat sich als nachteilig erwiesen, daß die Streifen durch die Gewichtsbelastung des sich auf den Streifen absetzenden biologischen Rasens mit der Zeit glatt gezogen werden und dadurch allmählich zusammenkleben. Das Fluid kann deshalb zwischen dem biologischen Rasen benachbarter Streifen nicht mehr hindurchströmen. Die Wirksamkeit einer mit solchem Füllmaterial versehenen Abwasserbehandlungs-Anlage wird dadurch reduziert.

Zur Vermeidung des vorstehend genannten Nachteils ist aus der EP-B 0 332 907 ein Füllmaterial bekannt, auf dessen Streifen ein einziger Strang etwa mittig angeordnet ist. Die Streifen weisen ebenfalls über ihre Länge gleiche Querschnitte auf. Zur Erhöhung der Streifendichte müssen die Streifen in mehreren Lagen übereinander angeordnet werden. Es hat sich gezeigt, daß sich das zu behandelne Fluid nur ungleichmäßig auf die unterschiedlichen Lagen der Streifen verteilt. Dadurch ist die wirksame Streifendichte im wesentlichen auf die obere Lage beschränkt.

Desweiteren hat es sich als aufwendig erwiesen, Füllmaterial mit mehreren übereinander angeordneten Lagen von Streifen zu bilden.

Hiervon ausgehend liegt der Erfindung die Aufgabe zugrunde, ein wirksames und gleichwohl einfach herstellbares Füllmaterial für Tropfkörper mit einer großen wirksamen Streifendichte sowie ein Verfahren zur Herstellung desselben zu schaffen.

Zur Lösung dieser Aufgabe weist das erfindungsgemäße Füllmaterial die kennzeichnenden Merkmale des Anspruchs 1 auf. Infolge der Querschnittsverengung an den Streifen können erheblich mehr Streifen in einer Lage nebeneinander angeordnet werden. Die Streifendichte wird erhöht. Es kann daher auf die Anordnung der Streifen in mehreren übereinander angeordneten Lagen verzichtet werden. Der Fertigungsaufwand des Füllmaterials wird somit reduziert.

Bei einer vorteilhaften Ausgestaltung des Füllmaterials nimmt die Breite der Streifen mindestens im Bereich der Haltebahn und vorzugsweise in einem Bereich unmittelbar links und/oder rechts neben der Haltebahn ab, wobei der Bereich der verringerten Breite der Streifen auf die Abmessungen der Trageinrichtung abgestimmt ist. Dadurch wird vermieden, daß sich das zu behandelnde Fluid im Bereich der Trageinrichtung staut.

Nach einer vorteilhaften Weiterbildung der Erfindung ist auf den Streifen mindestens ein Strang, vorzugsweise eine Stranggruppe aus zwei oder drei zugaufnehmenden Einzelsträngen Streifen angeordnet, wobei die Einzelstränge in Längsrichtung der Streifen verlaufen. Ein Vorteil dieser Weiterbildung besteht darin, daß sich die Streifen unter der Belastung des darauf angesiedelten biologischen Rasens nicht dehnen können und demnach ihre gewellte Gestalt beibehalten. Durch die Anordnung einer Stranggruppe aus mehreren Einzelsträngen ist eine bessere Lastverteilung gewährleistet. Durch die Anzahl und den Abstand der zugaufnehmenden Einzelstränge auf den Streifen läßt sich die Verengung der Streifen bestimmen. Die Einzelstränge können sowohl auf einer Seite als auch auf beiden Seiten der Streifen angeordnet sein.

Ein weiteres zur Lösung der Aufgabe dienendes Füllmaterial weist die Merkmale des Anspruchs 6 auf. Hier ist die Haltebahn aus zwei parallel verlaufenden Teilbahnen gebildet, wobei die Streifen zwischen den Teilbahnen der Haltebahn verlaufen und fest mit diesen verbunden sind. Die beidseitige Verbindung der Streifen mit der Haltebahn gewährleistet die sichere und nahezu unlösbare Verbindung der Streifen mit der Haltebahn.

Das erfindungsgemäße Verfahren weist die Merkmale des Anspruchs 7 auf. Demnach werden die Streifen vor ihrer Verbindung mit der Haltebahn bzw. den Haltebahnen bereichsweise in ihrer Breite verringert. Anschließend werden die derart bearbeiteten Streifen mit der quergerichteten Haltebahn oder mehreren Haltebahnen verbunden.

Bei einer Weiterentwicklung des erfindungsgemäßen Verfahrens ist vorgesehen, daß mindestens ein, vorzugsweise zwei oder drei kontinuierlich unter Hitzeeinwirkung hergestellte (extrudierte) Einzelstränge in mindestens warmem Zustand auf die Materialbahn kontinuierlich aufgebracht werden. Die Stränge werden insbesondere unter Druckeinwirkung mit der Materialbahn versiegelt oder verschweißt.

Weitere bevorzugte Weiterbildungen der Erfindung ergeben sich aus den Unteransprüchen und der Beschreibung.

Nachfolgend werden bevorzugte Ausführungsbeispiele der Erfindung anhand der Zeichnungen näher erläutert. In der Zeichnung zeigen:
- Fig. 1: einen Ausschnitt aus einem Tropfkörper mit über ein Traggerüst gehängtes Füllmaterial in einer Ansicht von vorne,
- Fig. 2: einen Ausschnitt aus dem Tropfkörper nach Fig. 1 in einer Seitenansicht,
- Fig. 3: eine Draufsicht auf das Füllmaterial gemäß der Fig. 1 und Fig. 2,
- Fig. 4: eine Seitenansicht des Füllmaterials gemäß der Fig. 3,
- Fig. 5: eine vergrößert dargestellte, flächige Ansicht eines Abschnitts aus einem einzigen Streifen des Füllmaterials nach einem ersten Ausführungsbeispiel der Erfindung,
- Fig. 6: eine Darstellung gemäß Fig. 5 nach einem zweiten Ausführungsbeispiel der Erfindung,
- Fig. 7: einen Querschnitt durch den Streifen gemäß der Fig. 5,
- Fig. 8: einen Querschnitt durch den Streifen gemäß der Fig. 6,
- Fig. 9: eine Seitenansicht einer Vorrichtung zur Herstellung des Füllmaterials, und
- Fig. 10: eine schematisch dargestellte Draufsicht auf die Vorrichtung gemäß der Figur 9.

Das in den Ausführungsbeispielen gezeigte Füllmaterial dient als Tropfkörper zur beispielsweise biologischen Abwasserbehandlung.

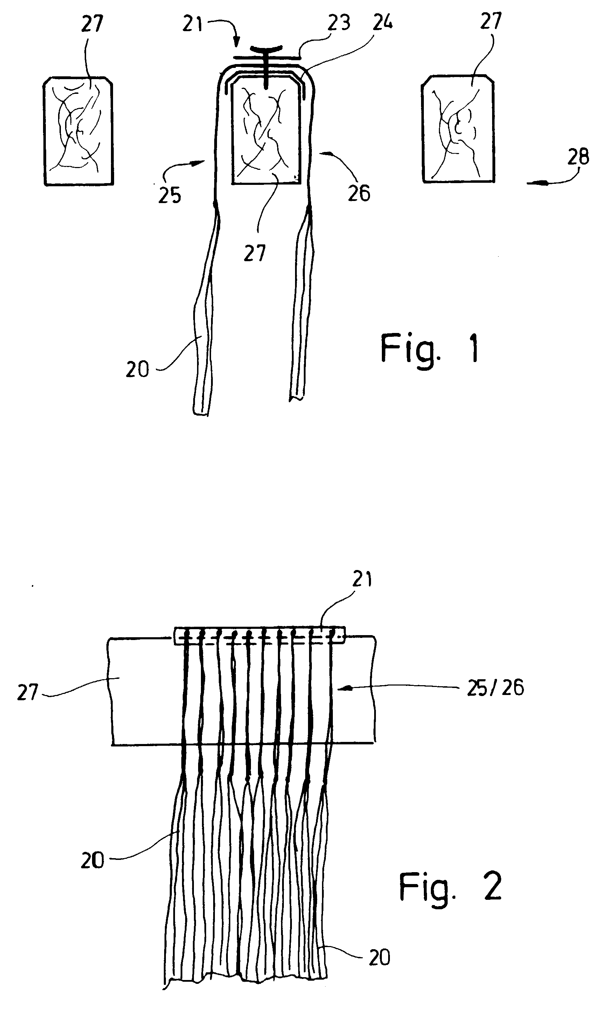

Die Fig. 1 bis 8 zeigen Ausführungsformen des Füllmaterials, bei denen eine Vielzahl von nebeneinanderliegenden, länglichen Streifen 20 durch eine mittige, quer verlaufende Haltebahn 21 miteinander verbunden sind. Die einzelnen Streifen 20 des Füllmaterials sind hier in einer Lage angeordnet. Es ist jedoch auch denkbar, die Streifen 20 in mehreren übereinanderliegenden Lagen anzuordnen.

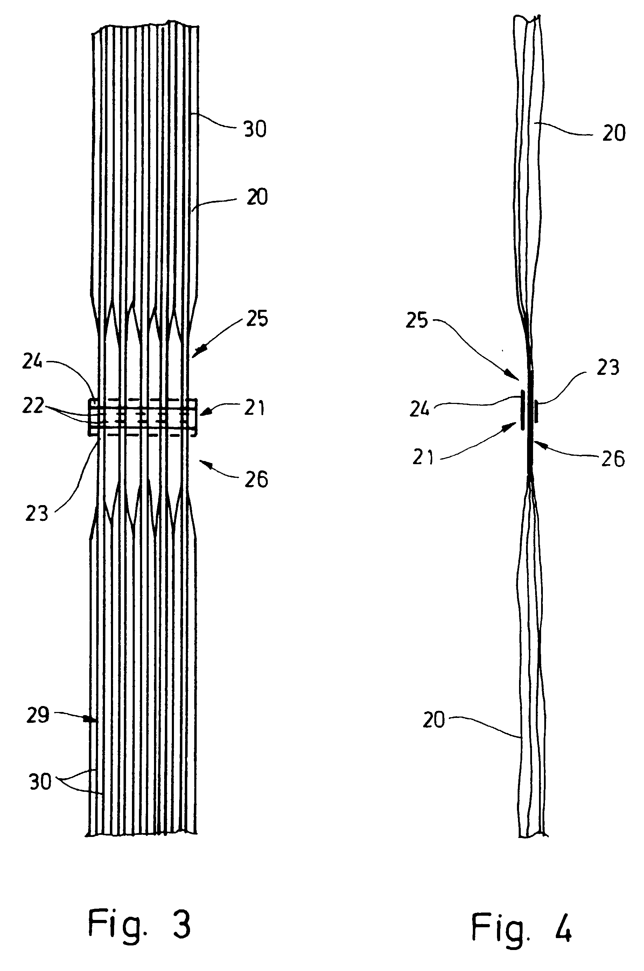

Die Streifen 20 stehen mit etwa einem gleichlangen Bereich links und rechts gegenüber der Haltebahn 21 vor (Fig. 3.). Jeder Streifen verläuft im Bereich der Haltebahn 21 ununterbrochen weiter und ein einziger Streifen 20 dient zur Bildung beider Teile des Füllmaterials, nämlich des links bzw. rechts von der Haltebahn 21 liegenden Füllmaterials.

Verbunden mit der Haltebahn 21 sind die Streifen 20 im vorliegenden Fall durch zwei parallele Siegelnähte 22. Die Siegelnähte 22 verlaufen mit Abstand parallel zu den Seitenrändern der Haltebahn 21. Auch zwischen den Siegelnähten 22 verlaufen die Streifen 20 ohne eine Verbindung untereinander bzw. zur Haltebahn 21.

Die Haltbahn 21 besteht im vorliegenden Ausführungsbeispiel aus zwei parallel verlaufenden Teilbahnen 23 und 24. Zwischen den Teilbahnen 23 und 24 verlaufen die Streifen 20. Die Siegelnähte 22 verbinden einerseits die Streifen 20 mit den Teilbahnen 23 und 24 der Haltebahn 21, andererseits verbinden sie die Teilbahnen 23 und 24 direkt miteinander.

Die Streifen 20 weisen im Bereich der Haltebahn 21 und in Bereichen 25 und 26 unmittelbar links und/oder rechts neben der Haltebahn einen verringerten Querschnitt auf. Die Breite der Streifen 20 nimmt von den Enden derselben zur Haltebahn 21 hin ab.Diese Breitenmaßnahme der Streifen 20 kann sowohl stetig stufenlos als auch umseitig gestuft erfolgen. Die Bereiche 25 und 26 mit verringerter Breite der Streifen 20 sind auf die Abmessungen eines Tragbalkens 27 einer Trageinrichtung 28 abgestimmt (Fig. 1 und Fig. 2). Das erfindungsgemäße Füllmaterial ist auf den Tragbalken 27 aufgehängt. Das Füllmaterial ist U-förmig über den Tragbalken 27 herübergelegt. Ein Teil der Haltebahn 21 deckt die obere, horizontale Fläche des Tragbalkens 27 ab. Die gegenüberliegenden, aufrechten Flächen des Tragbalkens 27 werden aufgrund der Querschnittsverengung der Streifen 20 größtenteils nicht bedeckt. Das zu behandelnde Fluid staut sich nicht im Bereich der Tragbalken, sondern fließt schnell auf die darunterliegenden Abschnitte der Streifen 20 ab. Alternativ ist es denkbar, daß die Streifen 20 nur im Bereich der Haltebahn 21 einen verringerten Querschnitt, insbesondere eine verringerte Breite, aufweisen.

In den vorliegenden Ausführungsbeispielen ist (Fig. 1 bis 8) jedem Streifen 20 ein Zugorgan, nämlich eine Stranggruppe 29 zugeordnet. Die Stranggruppe 29 besteht aus zwei oder drei zugaufnehmenden Einzelsträngen 30. Die Einzelstränge 30 einer Stranggruppe 29 verlaufen parallel mit gleichem Abstand zueinander. Sie verlaufen über die gesamte Länge der Streifen 20. Die Anordnung der Einzelstränge 30 ist derart getroffen, daß die sich auf einer Seite der Streifen 20 befinden, und daß die äußeren Einzelstränge 30 etwa gleichen Abstand zu den Rändern 32 des Streifens 20 aufweisen. Alternativ ist es auch denkbar, eine Stranggruppe 29 auf beiden Seiten jedes Streifens 20 anzuordnen. Es ist schließlich auch möglich, auf jeder Seite der Streifen 20 nur einen Einzelstrang 31 anzuordnen, und zwar sowohl gegenüberliegend als auch versetzt zueinander.

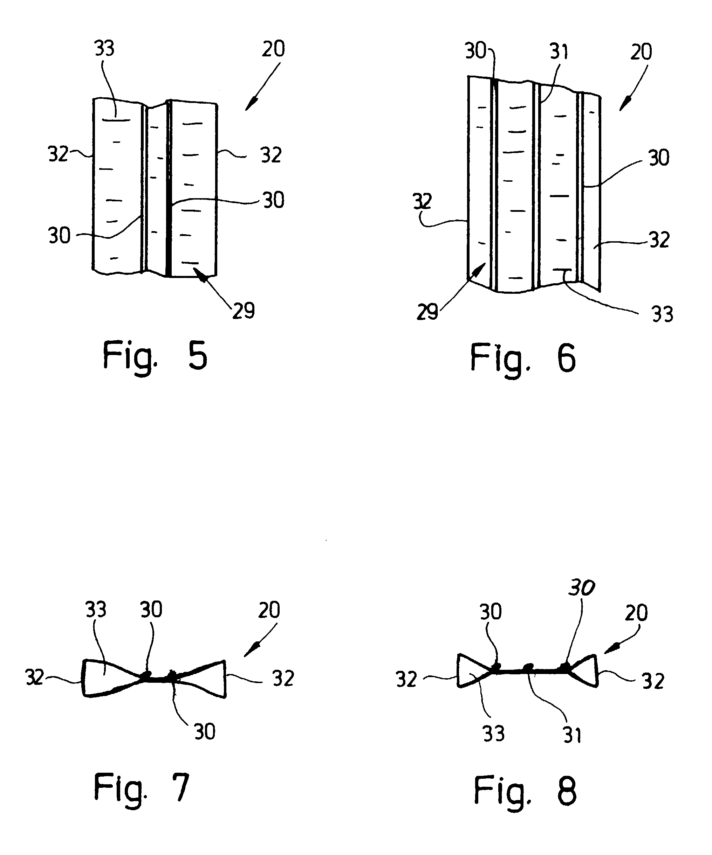

Aus den Fig. 5 bis 8 wird erkennbar, daß gegenüber der Stranggruppe 29, die annähernd geradlinig verläuft, der Streifen 20 gekräuselt ist, und zwar derart, daß er über quer zur Längsrichtung verlaufende Falten 33 verfügt. Die parallelen Ränder 32 des Streifens 20 weisen daher einen deutlich gewellten Verlauf auf. Dieser nimmt ausgehend von den Rändern 32 zur Stranggruppe 29 hin allmählich ab. Durch diese Ausbildung erhält der Streifen 20 eine dreidimensionale Struktur, die eine optimale Fläche für den darauf zur biologischen Abwasserbehandlung anzusiedelnden "biologischen Rasen" ist.

Die Einzelstränge 30, 31 verfügen über einen etwa kreisförmigen Querschnitt, dessen Durchmesser erheblich größer als die Dicke des Materials für den Streifen 20 ist. Als Material für die Einzelstränge 30, 31 kommt ein thermoplastischer Kunststoff mit geringer Dehnung, beispielsweise Polypropylen oder Polyethylen, in Betracht. Dadurch behält der Streifen - gestützt von den Einzelsträngen 30, 31 - seine Länge im belasteten Zustand, also mit auf der Oberfläche des Streifens 20 angesiedeltem "biologischen Rasen", in etwa bei. Die Glättung des Streifens 20 wird vermieden, insbesondere bleibt die wellenförmige Struktur der Ränder 32 beibehalten.

Die Stranggruppe 29 bestimmt den Grad der Querschnittsverengung der Streifen 20 im Bereich der Haltebahn 21 und in den Bereichen 25, 26 unmittelbar links und/oder rechts neben der Haltebahn 21. Je größer der Abstand der äußeren Einzelstränge 30 zu den Rändern 32 des Strangs 20 ist, desto größer ist auch die Querschnittsverengung in den Bereichen 25, 26 und dem Bereich der Haltebahn 21 (Fig. 3).

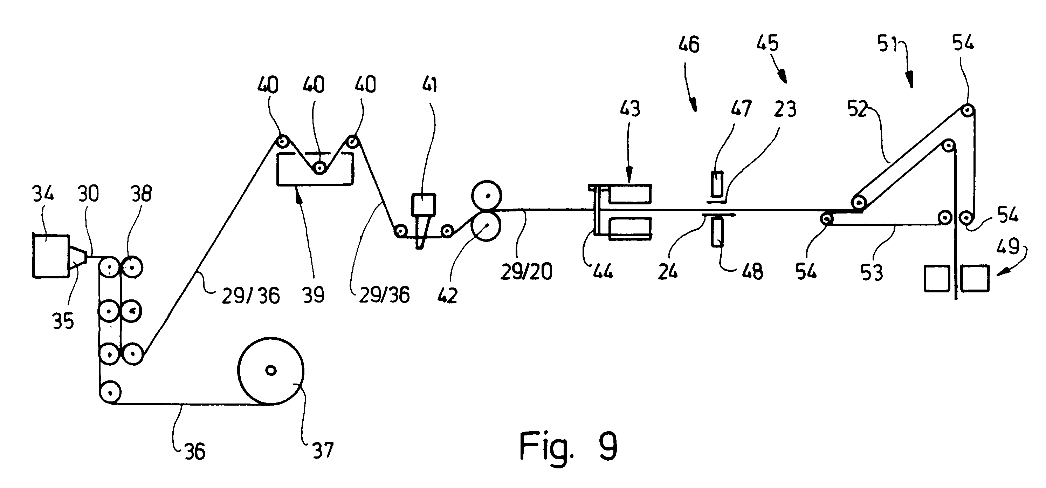

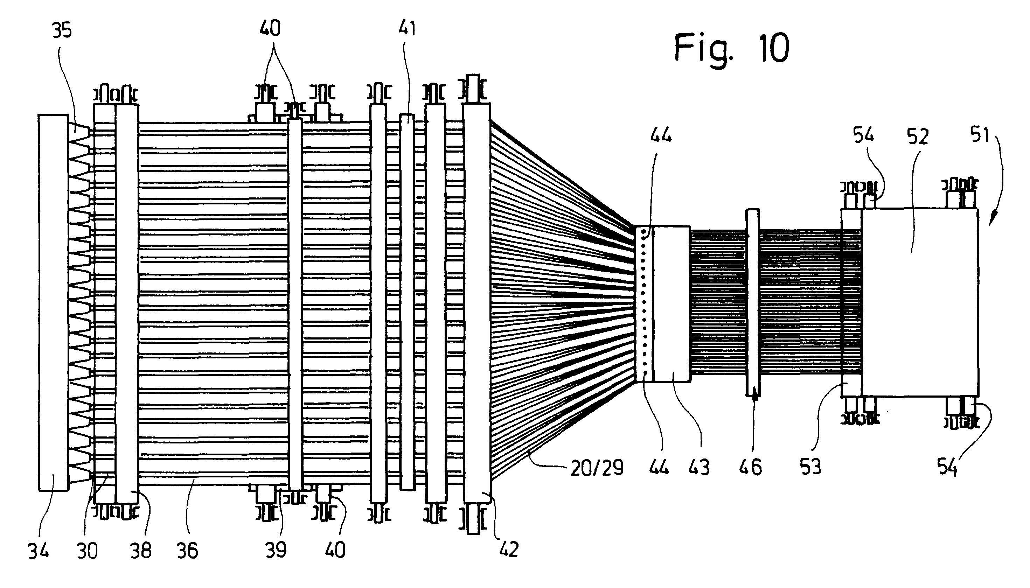

Eine Vorrichtung zur Herstellung des erfindungsgemäßen Füllmaterials mit zwei Einzelsträngen 30 je Streifen 20 ist schematisch in Fig. 9 und 10 dargestellt. Bei der gezeigten Vorrichtung werden mehrere mit Abstand nebeneinanderliegende Einzelstränge 30 von einem Extruder 34 hergestellt. Die aus den Mundstücken 35 des Extruders 34 austretenden Einzelstränge 30 werden noch im heißen Zustand mit einer kalten Materialbahn 36 zusammengeführt und verschweißt bzw. versiegelt. Dazu wird die Materialbahn 36 von einer Vorratsrolle 37 abgezogen und zwischen entsprechende Walzenpaare, nämlich im vorliegenden Ausführungsbeispiele drei Walzenpaare 38 geführt. Zwischen diesen verlaufen auch die aus den Mundstücken 35 des Extruders 34 austretenden und noch heißen Einzelstränge 30. Dadurch erfolgt beim Hindurchführen der Einzelstränge 30 und der Materialbahn 36 durch die Walzenpaare 38 eine Verschweißung der Einzelstränge 30 mit der Materialbahn 26.

Im Anschluß an die Walzenpaare 38 wird die mit den Stranggruppen 29 bzw. Einzelsträngen 30 versehene Materialbahn 36 durch eine Kühlstation 39 geführt. Dabei wird die Materialbahn 36 über mehrere Umlenkrollen 40 geführt. Bei der in der Kühlstation 39 erfolgenden Abkühlung der Einzelstränge 30 schwinden diese. Dabei wird die kalte, also nicht schwindende Materialbahn 36 zusammengezogen, wodurch sie ihre besondere, an den Rändern 32 auftretende Kräuselung erhält.

Im Anschluß an die Kühlstation 39 wird die so mit den Stranggruppen 29 versehene, gekräuselte Materialbahn 36 einer Schneideinrichtung 41 zugeführt. Die Materialbahn 36 wird in Streifen 20 geschnitten. Die Materialbahn 36 wird derart in Streifen 20 geschnitten, daß sich auf jedem Streifen 20 eine Stranggruppe 29 aus zwei Einzelsträngen 30 befindet.

Im Anschluß an die Schneideinheit 41 wird die in Streifen 20 geschnittene Materialbahn 36 über ein Abzugswalzenpaar 42 einer Schrumpfeinrichtung 43 über Umlenkbolzen 44 zugeführt. In der Schrumpfeinrichtung 43 werden die Streifen 20 bereichsweise in ihrer Breite verringert. Die Verringerung der Breite der Streifen 20 wird thermisch durchgeführt. Hierzu werden die Streifen mit Heißluft behandelt. Die thermische Behandlung der Streifen 20 wird in regelmäßigen Zeitabständen durchgeführt, so daß ausgewählte Bereiche mit verringerter Breite der Streifen 20 geschaffen werden.

Nach der Verringerung der Breite der Streifen 20 in der Schrumpfeinrichtung 43 folgt eine Endbehandlungszone 45. In dieser erfolgt das Verbinden der Streifen 20 mit der quergerichteten Haltebahn 21. Die Haltebahn 21 besteht aus zwei Teilbahnen 23 und 24. Diese werden von entsprechenden Materialrollen abgezogen. Bei momentanem Stillstand der Streifen 20 und der Teilbahnen 23, 24 erfolgt ein Versiegeln derselben in einer Siegelstation 46. Das Versiegeln der Streifen 20 mit den Teilbahnen 23, 24 erfolgt beidseitig der Streifen 20 durch ein Paar quergerichteter Siegelbacken 47, 48, die unter Wärmeeinwirkung und momentanem Zusammempressen eine Versiegelung herbeiführen. Um dabei die beiden parallelen Siegelnähte 22 entstehen zu lassen, verfügt die (obere) Siegelbacke 47 an ihrer Unterseite über zwei parallel verlaufende Rippen, die beim Versiegeln zwei parallele Kontaktstreifen der Haltebahn 21 bilden. Die Teilbahnen 23, 24 der Haltebahn 21 werden zum Teil mit den Streifen 20 und zum Teil untereinander versiegelt.

Gleichzeitig mit dem Versiegeln der Streifen 20 an der Haltebahn 21 erfolgt durch eine mit Abstand von der Siegelstation 46 angeordnete Schneideinrichtung 49 eine Trennung von einem Füllmaterial zum nachfolgenden. Alternativ ist es auch möglich, daß die nun mit der Haltebahn 21 verbundenen Streifen 20 an Stelle einer Schneideinrichtung 49 einer Siegeleinrichtung zugeführt werden. Hier erfolgt eine Markierung des Übergangs von einem Füllmaterial zum nachfolgenden Füllmaterial durch die Bildung eines Signierstreifens. Die Streifen werden der Schneideinrichtung 49 oder der Siegeleinrichtung über eine Abziehstation, insbesondere über einen Gurtförderer 51, zugeführt. Der Gurtförderer 51 besteht aus zwei Einzelgurten 52 und 53, die über Umlenkwalzen 54 geführt sind. Im Berührungsbereich der Einzelgurte 52 und 53 liegt das Füllmaterial an und wird abgezogen. Wenigstens eine der Umlenkwalzen 54 der vorstehend beschriebenen Vorrichtung ist drehend antreibbar zum Hindurchziehen der fertig zu bearbeitenden Materialbahn 36 durch die Schneideinrichtung 41, die Schrumpfeinrichtung 43 und die Siegelstation 46.

## Patentansprüche

1. Füllmaterial für Tropfkörper zur Behandlung von Fluiden, insbesondere zur biologischen Abwasserreinigung, mit einer Vielzahl von Streifen (20) aus Kunststoff, die mit mindestens einer quer zu ihrer Längsrichtung verlaufenden Haltebahn (21) verbunden sind zur hängenden Anordnung an einer Trageinrichtung (28), **dadurch gekennzeichnet**, daß die Streifen (20) zumindest in den Bereichen der Haltebahn (21) eine verringerte Breite aufweisen.

2. Füllmaterial nach Anspruch 1, dadurch gekennzeichnet, daß die Streifen (20) über ihre Länge eine unterschiedliche Breite aufweisen.

3. Füllmaterial nach Anspruch 1, dadurch gekennzeichnet, daß die Breite der Streifen (20) von den Enden derselben zur Haltebahn (21) abnimmt, wobei die Haltebahn (21) etwa mittig zwischen den einander gegenüberliegenden Enden der Streifen (20) angeordnet ist.

4. Füllmaterial nach Anspruch 1, dadurch gekennzeichnet, daß die Breite der Streifen (20) mindestens im Bereich der Haltebahn (21) abnimmt.

5. Füllmaterial nach Anspruch 1, dadurch gekennzeichnet, daß auf wenigstens einer Seite der Streifen (20) mindestens ein zugaufnehmender Strang (Einzelstrang 30, 31) angeordnet ist, wobei der Strang oder die Stränge in Längsrichtung der Streifen (20) verlaufen.

6. Füllmaterial für Tropfkörper zur Behandlung von Fluiden, insbesondere zur biologischen Abwasserreinigung, mit einer Vielzahl von Streifen (20) aus Kunststoff, die mit einer quer zu ihrer Längsrichtung verlaufenden Haltebahn (21) verbunden sind, dadurch gekennzeichnet, daß die Haltebahn (21) aus zwei parallel verlaufenden Teilbahnen (23, 24) gebildet ist, wobei die Streifen (20) eine verringerte Breite mindestens in den Bereichen zwischen den Teilbahnen (23, 24) der Haltebahn (21) aufweisen und fest mit den Teilbahnen (23, 24) verbunden sind.

7. Verfahren zur Herstellung von zur Behandlung von Fluiden, insbesondere zur biologischen Abwasserreinigung, dienendem Füllmaterial, wobei aus einer Materialbahn (36) nebeneinander liegende Streifen (20) gebildet und die Streifen (20) mit mindestens einer quergerichteten Haltebahn (21) verbunden werden, **dadurch gekennzeichnet**, daß die Streifen (20) mindestens in Bereichen ihrer Verbindung mit der Haltebahn (21) bzw. den Haltebahnen (21) in ihrer Breite verringert werden.

8. Verfahren nach Anspruch 7, dadurch gekennzeichnet, daß die Streifen (20) zur Verringerung der Breite thermisch, insbesondere mit Heißluft, behandelt werden, wobei die thermische Behandlung der Streifen (20) in regelmäßigen Zeitabständen durchgeführt wird.

9. Verfahren nach Anspruch 7, dadurch gekennzeichnet, daß die Streifen (20) beidseitig mit der Haltebahn (21) verbunden werden.

10. Verfahren nach Anspruch 7, dadurch gekennzeichnet, daß während des Aufbringens der Haltebahn (21) die Streifen (20) über die gesamte Breite der Materialbahn (36) getrennt oder signiert werden zur Abgrenzung des nachfolgenden Füllmaterials.

## Claims

1. Filling material for percolating filters for the treatment of fluids, especially for biological sewage purification, with a multiplicity of plastic strips (20) which are connected to at least one holding web (21) extending transversely relative to their longitudinal direction for a hanging arrangement on a carrier device (28), characterized in that the strips (20) have a reduced width at least in the regions of the holding web (21).

2. Filling material according to Claim 1, characterized in that the strips (20) have a different width over their length.

3. Filling material according to Claim 1, characterized in that the width of the strips (20) decreases from the ends of these towards the holding web (21), the holding web (21) being arranged approximately centrally between the ends of the strips (20) located opposite one another.

4. Filling material according to Claim 1, characterized in that the width of the strips (20) decreases at least in the region of the holding web (21).

5. Filling material according to Claim 1, characterized in that at least one tension-absorbing strand (individual strand 30, 31) is arranged on at least one side of the strips (20), the strand or strands extending in the longitudinal direction of the strips (20).

6. Filling material for percolating filters for the treatment of fluids, especially for biological sewage purification, with a multiplicity of plastic strips (20) which are connected to a holding web (21) extending transversely relative to their longitudinal direction, characterized in that the holding web (21) is formed from two parallel part webs (23, 24), the strips (20) having a reduced width at least in the regions between the part webs (23, 24) of the holding web (21) and being connected firmly to said part web (23, 24).

7. Process for the production of filling material serving for the treatment of fluids, especially for biological sewage purification, strips (20) lying next to one another being formed from a material web (36) and the strips (20) being connected to at least one transversely directed holding web (21), characterized in that the strips (20) are reduced in width at least in their regions of connection to the holding web (21) or holding webs (21).

8. Process according to Claim 7, characterized in that the strips (20) are treated thermally, especially with hot air, to reduce the width, the thermal treatment of the strips (20) being carried out at regular time intervals.

9. Process according to Claim 7, characterized in that the strips (20) are connected on both sides to the holding web (21).

10. Process according to Claim 7, characterized in that, during the application of the holding web (21), the strips (20) are separated or marked over the entire width of the material web (36), in order to delimit the following filling material.

## Revendications

1. Matériau de charge pour corps d'égouttage pour le traitement de fluides, en particulier pour l'épuration biologique d'eau usée, présentant une multiplicité de rubans (20) en matière synthétique qui sont reliés à au moins une bande de retenue (21) qui s'étend transversalement par rapport à leur direction longitudinale, pour être disposés en suspension sur un dispositif de support (28), caractérisé en ce qu'au moins dans les régions de la bande de retenue (21), les rubans (20) présentent une largeur réduite.

2. Matériau de charge selon la revendication 1, caractérisé en ce que les rubans (20) présentent une largeur qui varie suivant leur longueur.

3. Matériau de charge selon la revendication 1, caractérisé en ce que la largeur des rubans (20) diminue depuis leur extrémité jusqu'à la bande de retenue (21), et la bande de retenue (21) est disposée sensiblement au milieu entre les extrémités mutuellement opposées des rubans (20).

4. Matériau de charge selon la revendication 1, caractérisé en ce que la largeur des rubans (20) diminue au moins dans la région de la bande de retenue (21).

5. Matériau de charge sur la revendication 1, caractérisé en ce qu'au moins une tige de reprise de traction (tige individuelle 30, 31) est disposée au moins sur un côté des rubans (20), la tige ou les tiges s'étendant dans la direction longitudinale des rubans (20).

6. Matériau de charge pour corps d'égouttage pour le traitement de fluides, en particulier pour l'épuration biologique d'eau usée, présentant une multiplicité de rubans (20) en matière synthétique qui sont reliés à au moins une bande de retenue (21) qui s'étend transversalement par rapport à leur direction longitudinale, caractérisé en ce que la bande de retenue (21) est formée de deux bandes partielles (23, 24) qui s'étendent en parallèle, et les rubans (20) présentent une largeur réduite au moins dans les zones situées entre les bandes partielles (23, 24) de la bande de retenue (21) et sont reliés fixement aux bandes partielles (23, 24).

7. Procédé de fabrication d'un matériau de charge servant au traitement de fluides, en particulier à l'épuration biologique d'eau usée, dans lequel des rubans (20) situés les uns à côté des autres sont formés dans une bande de matière (36), et les rubans (20) sont reliés à au moins une bande de retenue (21) orientée transversalement, caractérisé en ce que les rubans (20) se réduisent en largeur au moins dans les zones de leur liaison à la bande de retenue (21) ou aux bandes de retenue (21).

8. Procédé selon la revendication 7, caractérisé en ce que pour la réduction de leur largeur, les rubans (20) sont traités thermiquement, en particulier à l'air chaud, et le traitement thermique des rubans (20) est réalisé à intervalles de temps réguliers.

9. Procédé selon la revendication 7, caractérisé en ce que les rubans (20) sont reliés des deux côtés à la bande de retenue (21).

10. Procédé selon la revendication 7, caractérisé en ce que pendant l'application de la bande de retenue (21), les rubans (20) sont séparés sur toute la largeur de la bande de matière (36) et sont signés, pour limiter le matériau de charge suivant.
